(19) Europäisches Patentamt
European Patent Office
Office européen des brevets

(11) **EP 4 246 777 A1**

(12) **EUROPEAN PATENT APPLICATION**
published in accordance with Art. 153(4) EPC

(43) Date of publication:
**20.09.2023 Bulletin 2023/38**

(21) Application number: **21910014.6**

(22) Date of filing: **10.11.2021**

(51) International Patent Classification (IPC):
**H02K 3/02** (2006.01)   **H02K 3/04** (2006.01)
**H02K 3/28** (2006.01)

(52) Cooperative Patent Classification (CPC):
**H02K 3/02; H02K 3/04; H02K 3/28**

(86) International application number:
**PCT/JP2021/041345**

(87) International publication number:
**WO 2022/137860 (30.06.2022 Gazette 2022/26)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **22.12.2020 JP 2020212867
23.12.2020 JP 2020213205**

(71) Applicant: **AISIN CORPORATION
Kariya-shi, Aichi 448-8650 (JP)**

(72) Inventors:
• **SAHA, Subrata
Kariya-shi, Aichi 448-8650 (JP)**

• **KOGA, Kiyotaka
Kariya-shi, Aichi 448-8650 (JP)**
• **MOMIKI, Takashi
Kariya-shi, Aichi 448-8650 (JP)**
• **NAGAE, Tokihito
Kariya-shi, Aichi 448-8650 (JP)**
• **OTOMORI, Masaki
Kariya-shi, Aichi 448-8650 (JP)**
• **TSUDA, Teppei
Kariya-shi, Aichi 448-8650 (JP)**

(74) Representative: **Kramer Barske Schmidtchen
Patentanwälte PartG mbB
European Patent Attorneys
Landsberger Strasse 300
80687 München (DE)**

(54) **STATOR**

(57)    In this stator, a slot-housed portion disposed on a radially inner side includes a first conductor portion and a second conductor portion having a higher electrical resistance per unit length than the first conductor portion, and has a higher electrical resistance per unit length than a slot-housed portion disposed on a radially outer side.

FIG.3

EP 4 246 777 A1

## Description

TECHNICAL FIELD

The present invention relates to a stator.

BACKGROUND ART

Hitherto, there is known a stator including a coil portion including a plurality of slot-housed portions arranged in a plurality of slots in a radial direction of a stator core. Such a stator is disclosed, for example, in Japanese Unexamined Patent Application Publication No. 2010-183741 (JP 2010-183741 A).

JP 2010-183741 A discloses a stator including a stator core having a plurality of slots and a coil disposed on the stator core. In the stator described in JP 2010-183741 A, the coil includes a plurality of coil side portions (slot-housed portions) arranged in the plurality of slots in a radial direction of the stator core. In each of the plurality of slots, a coil side portion (hereinafter referred to as "first coil side portion") made of a material such as copper having a relatively low electrical resistance (resistivity) per unit length is disposed on a radially outer side. Further, a coil side portion (hereinafter referred to as "second coil side portion") made of a material such as aluminum having a relatively high resistivity (higher than that of the first coil side portion) is disposed on the radially outer side.

Thus, in the stator described in JP 2010-183741 A, an increase in an eddy current loss (inversely proportional to resistivity) is suppressed in the second coil side portion disposed on the radially inner side where the eddy current loss is likely to occur. Further, an increase in a conductor loss (proportional to resistivity) is suppressed in the first coil side portion disposed on the radially outer side where the eddy current loss is unlikely to occur. The eddy current loss is a loss caused by an eddy current generated in the coil side portion by a magnetic flux generated by a rotor provided so as to face the stator on the radially inner side of the stator. The conductor loss is a loss from the coil side portion as Joule heat generated by the electrical resistance of the coil side portion itself.

Related Art Documents

Patent Documents

Patent Document 1: Japanese Unexamined Patent Application Publication No. 2010-183741 (JP 2010-183741 A)

SUMMARY OF THE INVENTION

Problem to be Solved by the Invention

In the stator described in JP 2010-183741 A, however, one type of material (such as aluminum) having a relatively high resistivity is used for the second coil side portion disposed on the radially inner side where the eddy current loss is likely to occur in order to suppress the increase in the eddy current loss (inversely proportional to resistivity) in the second coil side portion. Therefore, when the material that can be used for the coil side portion is limited, the conductor loss may increase more than the amount of decrease in the eddy current loss in the second coil side portion depending on the resistivity of the second coil side portion. Thus, there is a demand for a stator capable of easily reducing the overall loss (sum of conductor loss and eddy current loss) occurring in the coil side portion even if the material that can be used for the coil side portion (slot-housed portion) is limited.

The present invention has been made to solve the above problem, and one object of the present invention is to provide a stator capable of easily reducing the overall loss occurring in a slot-housed portion even if the material that can be used for the slot-housed portion is limited.

Means for Solving the Problem

To achieve the above object, a stator according to one aspect of the present invention includes a stator core having a plurality of slots, and a coil portion disposed in the stator core and including a plurality of slot-housed portions arranged in the plurality of slots in a radial direction of the stator core. In each of the plurality of slots, the slot-housed portion disposed on an inner side in the radial direction includes a first conductor portion and a second conductor portion having a higher electrical resistance per unit length than the first conductor portion, and is structured to have a higher electrical resistance per unit length than the slot-housed portion disposed on an outer side in the radial direction.

In the stator according to the one aspect of the present invention, as described above, in each of the plurality of slots, the slot-housed portion disposed on the inner side in the radial direction is structured to have a higher electrical resistance (resistivity) per unit length than the slot-housed portion disposed on the outer side in the radial direction. Therefore, it is possible to suppress an increase in an eddy current loss (inversely proportional to resistivity) in the slot-housed portion disposed on the inner side in the radial direction where the eddy current loss is likely to occur. Further, it is possible to suppress an increase in a conductor loss (proportional to resistivity) in the slot-housed portion disposed on the outer side in the radial direction where the eddy current loss is unlikely to occur. In the stator according to the one aspect, as described above, in each of the plurality of slots, the slot-housed portion disposed on the inner side in the radial direction includes the first conductor portion and the second conductor portion having a higher electrical resistance (resistivity) per unit length than the first conductor portion. Therefore, the slot-housed portion disposed on the inner side in the radial direction includes, in addition to the second conductor portion having a relatively high resistivity, the first conductor portion having a relatively low resistivity and used also in the slot-housed portion disposed on the outer side in the radial direction. Therefore, adjustment can be made so as to easily optimize the resistivity of the slot-housed portion disposed on the inner side in the radial direction compared to a case where one type of material having a relatively high resistivity is used for the slot-housed portion disposed on the inner side in the radial direction. As a result, it is possible to easily reduce the overall loss occurring in the slot-housed portion even if the material that can be used for the slot-housed portion is limited.

Effects of the Invention

According to the present invention, as described above, it is possible to provide the stator capable of easily reducing the overall loss occurring in the slot-housed portion even if the material that can be used for the slot-housed portion is limited.

BRIEF DESCRIPTION OF THE DRAWINGS

[FIG. 1] FIG. 1 is a plan view showing a stator according to a first embodiment.
[FIG. 2] FIG. 2 is a sectional perspective view showing the stator according to the first embodiment.
[FIG. 3] FIG. 3 is a sectional plan view showing slot-housed portions of the stator according to the first embodiment.
[FIG. 4] FIG. 4 is a sectional plan view showing slot-housed portions of a stator according to a second embodiment.
[FIG. 5] FIG. 5 is a sectional plan view showing slot-housed portions of a stator according to a third embodiment.
[FIG. 6] FIG. 6 is a plan view showing the configuration of a rotary electric machine according to a fourth embodiment.
[FIG. 7] FIG. 7 is a partially enlarged plan view showing the configuration of a slot of the stator according to the fourth embodiment.
[FIG. 8] FIG. 8 is a circuit diagram showing a wiring configuration of a coil portion according to the fourth embodiment.
[FIG. 9] FIG. 9 is a schematic diagram showing the configuration of a segment conductor according to the fourth embodiment.
[FIG. 10] FIG. 10 is a partially enlarged plan view showing the configuration of a slot of a stator according to a fifth embodiment.
[FIG. 11] FIG. 11 is a sectional plan view showing slot-housed portions of a stator according to a first modification of the first embodiment.
[FIG. 12] FIG. 12 is a sectional plan view showing slot-housed portions of a stator according to a second modification of the first embodiment.
[FIG. 13] FIG. 13 is a sectional plan view showing slot-housed portions of a stator according to a third modification of the first embodiment.

MODES FOR CARRYING OUT THE INVENTION

Hereinafter, embodiments of the present invention will be described with reference to the drawings.

[First Embodiment]

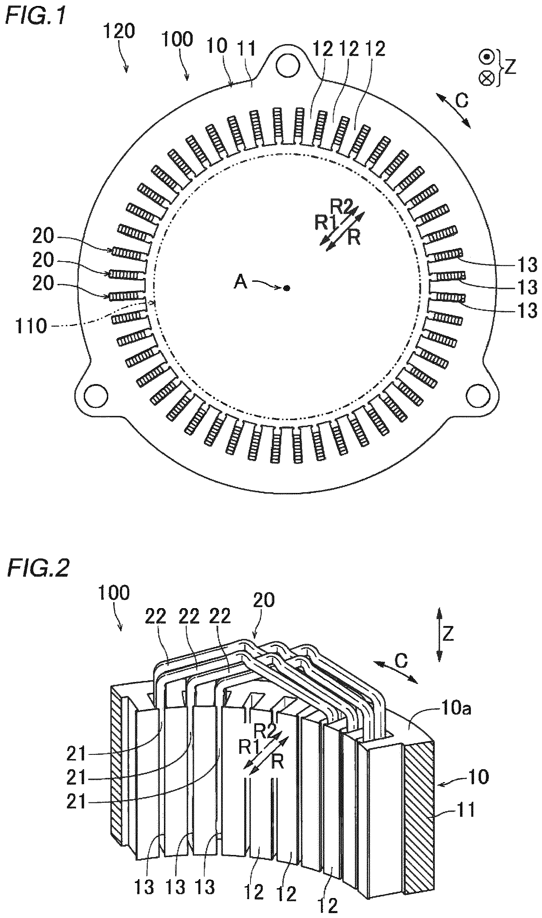

The configuration of a stator 100 according to a first embodiment will be described with reference to FIGS. 1 to 3.
In the following description, an axial direction, a radial direction, and a circumferential direction of a stator core 10 (see FIG. 1) of the stator 100 are defined as "Z direction", "R direction", and "C direction", respectively. One side (inner side) and the other side (outer side) in the R direction are defined as "R1 side" and "R2 side", respectively.

(Overall Configuration of Stator)

As shown in FIG. 1, the stator 100 together with a rotor 110 constitutes a rotary electric machine 120. For example, the rotary electric machine 120 is a motor, a generator, or a motor generator. The rotor 110 includes permanent magnets (not shown) that generate magnetic fluxes. The rotor 110 is disposed on the R1 side of the stator 100 such that the inner peripheral surface of the stator 100 and the outer peripheral surface of the rotor 110 face each other in the R direction.
The stator 100 includes the stator core 10. The stator core 10 has a cylindrical shape with its central axis being a central axis A along the Z direction. The stator core 10 is formed by stacking a plurality of electromagnetic steel sheets (for example, silicon steel sheets) in the Z direction.
The stator core 10 has a plurality of slots 13. Specifically, the stator core 10 includes an annular back yoke 11 and a plurality of teeth 12 protruding from the back yoke 11 to the R1 side. The plurality of slots 13 is formed between the teeth 12 adjacent to each other in the C direction.
As shown in FIG. 2, the plurality of slots 13 is provided so as to extend in the Z direction. Each of the plurality of slots 13 is formed in the stator core 10 so that both sides in the Z direction are open. Each of the plurality of slots 13 is formed in the stator core 10 so that the R1 side is open.
The stator 100 includes coil portions 20. The coil portions 20 are disposed in the stator core 10. Specifically, the coil portions 20 are wound around the stator core 10 multiple times. The coil portion 20 is structured, for example, as a wave winding coil. The coil portion 20 generates a magnetic flux by being supplied with three-phase alternating current power from a power supply unit (not shown).

The coil portion 20 includes a plurality of slot-housed portions 21 housed in the plurality of slots 13. As shown in FIG. 2, the coil portion 20 includes a plurality of coil end portions 22 connecting the slot-housed portions 21 housed in different slots 13. Each of the plurality of coil end portions 22 is disposed so as to protrude from an end face 10a of the stator core 10 in the Z direction.

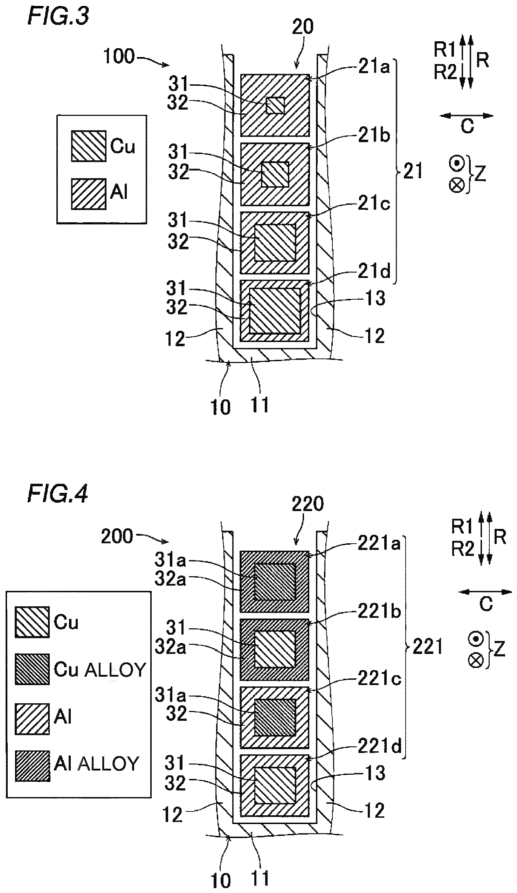

As shown in FIG. 3, the plurality of slot-housed portions 21 is arranged in the R direction in each of the plurality of slots 13. Specifically, a plurality of (four) slot-housed portions 21a, 21b, 21c, and 21d is arranged in a row along the R direction in this order from the R1 side to the R2 side.

(Loss Occurring in Conductor)

Aloss W [W] occurring in a conductor is represented by Expression (1) below assuming that S [m²] represents the area of a cross section of the conductor (cross section orthogonal to a direction in which the conductor extends), L [m] represents the length of the conductor, ρ [Ω·m] represents the resistivity of the conductor (electrical resistance per unit length), I [A] represents a value of a current flowing through the conductor, Ke represents a loss factor, t [m] represents the thickness of the conductor in a direction of magnetic flux flow, B [T] represents the density of a magnetic flux interlinking with the conductor, and f [Hz] represents a frequency.
[Expression 1]

$$W = \frac{L}{S}\rho I^2 + LSKe\frac{(tBf)^2}{\rho} \ ... \ (1)$$

The first term of Expression (1) above represents a conductor loss that is a loss from the conductor as Joule heat generated by the electrical resistance of the conductor itself. The second term of Expression (1) above represents an eddy current loss that is a loss caused by an eddy current generated in the conductor by the magnetic flux.

As is clear from Expression (1) above, the conductor loss is inversely proportional to the area (S) of the cross section of the conductor. The eddy current loss is proportional to the area (S) of the cross section of the conductor. That is, as the area (S) of the cross section of the conductor increases, the conductor loss decreases but the eddy current loss increases.

As is clear from Expression (1) above, the conductor loss is proportional to the resistivity (electrical resistance per unit length) (ρ) of the conductor. The eddy current loss is inversely proportional to the resistivity (ρ) of the conductor. That is, as the resistivity (ρ) of the conductor increases, the conductor loss increases but the eddy current loss decreases. In other words, as the resistivity (ρ) of the conductor decreases, the eddy current loss increases but the conductor loss decreases.

As is clear from Expression (1) above, the eddy current loss is proportional to the square of the frequency (f). That is, the eddy current loss becomes significant as the frequency (f) increases. Therefore, the eddy current loss is likely to increase when the rotary electric machine 120 (see FIG. 1) operates at high speed. The conductor loss has no correlation with the frequency (f).

As is clear from Expression (1) above, the eddy current loss is proportional to the square of the magnetic flux density (B). That is, the eddy current loss becomes significant as the magnetic flux density (B) increases. Therefore, the eddy current loss is likely to increase when the magnetic flux interlinking with the conductor (coil portion 20 (see FIG. 2)) increases. The conductor loss has no correlation with the magnetic flux density (B).

As described above, the rotor 110 (see FIG. 1) including the permanent magnets that generate magnetic fluxes is disposed on the R1 side of the stator 100 so as to face the stator 100. Therefore, in each of the plurality of slots 13, the density (B) of the magnetic flux interlinking with the slot-housed portion 21 disposed on the R1 side among the plurality of slot-housed portions 21 arranged along the R direction is relatively high. Thus, in each of the plurality of slots 13, the eddy current loss is likely to occur in the slot-housed portion 21 disposed on the R1 side.

(Detailed Configuration of Slot-housed Portions)

In each of the plurality of slots 13, the slot-housed portion 21 disposed on the R1 side (radially inner side) has a higher electrical resistance (resistivity) per unit length than the slot-housed portion 21 disposed on the R2 side (radially outer side) (Feature 1). Specifically, comparing any two slot-housed portions 21 among the plurality of (four) slot-housed portions 21 (21a, 21b, 21c, and 21d) in each of the plurality of slots 13, the slot-housed portion 21 disposed relatively on the R1 side has a higher resistivity than the slot-housed portion 21 disposed relatively on the R2 side.

As a result, it is possible to suppress an increase in the eddy current loss (inversely proportional to resistivity) in the slot-housed portion 21 disposed on the R1 side (radially inner side) where the eddy current loss is likely to occur. Further, it is possible to suppress an increase in the conductor loss (proportional to resistivity) in the slot-housed portion 21 disposed on the R2 side (radially outer side) where the eddy current loss is unlikely to occur.

In each of the plurality of slots 13, the slot-housed portion 21 disposed on the R1 side (radially inner side) includes a first conductor portion 31 and a second conductor portion 32 having a higher electrical resistance (resistivity) per unit length than the first conductor portion 31 (Feature 2). Specifically, in each of the plurality of slots 13, each of the plurality of (four) slot-housed portions 21 (21a, 21b, 21c, and 21d) includes the first conductor portion 31 and the second conductor portion 32 (having a higher resistivity than the first conductor portion 31) that are made of materials having different resistivities.

As a result, the slot-housed portion 21 disposed on the R1 side (radially inner side) includes, in addition to the second conductor portion 32 having a relatively high resistivity, the first conductor portion 31 having a relatively low resistivity and used also in the slot-housed portion 21 disposed on the R2 side (radially outer side). Therefore, adjustment can be made so as to easily optimize the resistivity of the slot-housed portion 21 disposed on the R1 side compared to a case where one type of material having a relatively high resistivity is used for the slot-housed portion 21 disposed on the R1 side.

As a result of these features (Features 1 and 2 above), it is possible to easily reduce the overall loss occurring in the slot-housed portion 21. A further detailed configuration of the slot-housed portions 21 will be described below.

The first conductor portion 31 is made of copper (Cu). The second conductor portion 32 is made of aluminum (Al). The resistivity (electrical resistance per unit length) of aluminum is higher than that of copper. The resistivity of aluminum is approximately $2.8 \times 10^{-8}$ ($\Omega \cdot m$). The resistivity of copper is approximately $1.7 \times 10^{-8}$ ($\Omega m$).

When the first conductor portion 31 and the second conductor portion 32 are made of copper (Cu) and aluminum (Al) having a higher electrical resistance per unit length than copper, respectively, the slot-housed portion 21 including the first conductor portion 31 and the second conductor portion 32 (having a higher electrical resistance per unit length than the first conductor portion 31) can be manufactured easily.

In each of the plurality of slots 13, each of the plurality of slot-housed portions 21 has a rectangular cross section. Specifically, each of the plurality of slot-housed portions 21 is structured by a rectangular conductor. In each of the plurality of slots 13, the plurality of (four) slot-housed portions 21 (21a, 21b, 21c, and 21d) has substantially equal sectional sizes.

Therefore, the space factor of the slot-housed portions 21 in the slot 13 can be increased compared to a case where each of the plurality of slot-housed portions 21 has a circular cross section. When the space factor (cross section) of the slot-housed portion 21 increases, the conductor loss decreases but the eddy current loss increases as described above. Therefore, the above configuration that can suppress the increase in the eddy current loss in the slot-housed portion 21 disposed on the R1 side where the eddy current loss is likely to occur is effective when using a rectangular conductor having a high space factor of the slot-housed portion 21.

In each of the plurality of slots 13, the slot-housed portion 21 including the first conductor portion 31 (copper) and the second conductor portion 32 (aluminum) is structured such that the second conductor portion 32 surrounds the first conductor portion 31. Specifically, the cross section of the first conductor portion 31 has a rectangular shape. The cross section of the second conductor portion 32 has a frame shape surrounding the first conductor portion 31 having the rectangular cross section. The plurality of slot-housed portions 21 is formed by, for example, 3D printing (forming a three-dimensional object by using a 3D printer).

As a result, the second conductor portion 32 having a relatively high resistivity (that is, easy to suppress the increase in the eddy current loss) is disposed at the outer peripheral part of the slot-housed portion 21 where the eddy current is relatively likely to occur. Therefore, the second conductor portion 32 disposed at the outer peripheral part of the slot-housed portion 21 can efficiently suppress the increase in the eddy current loss. Thus, it is possible to relatively increase the ratio of the first conductor portion 31 having a relatively low resistivity (that is, easy to suppress the increase in the conductor loss) in the slot-housed portion 21. Accordingly, it is possible to suppress the increase in the conductor loss in addition to the eddy current loss. As a result, in the slot-housed portion 21 including the first conductor portion 31 and the second conductor portion 32, the increase in the loss (sum of conductor loss and eddy current loss) occurring in the slot-housed portion 21 can efficiently be suppressed compared to a case where the first conductor portion 31 and the second conductor portion 32 are disposed at the outer peripheral part and the inner peripheral part, respectively.

In each of the plurality of slots 13, the ratio (sectional area ratio) of the second conductor portion 32 (aluminum) to the first conductor portion 31 (copper) in the slot-housed portion 21 is set higher in the slot-housed portion 21 disposed on the R2 side (radially outer side) than in the slot-housed portion 21 disposed on the R1 side (radially inner side) so that the slot-housed portion 21 disposed on the R1 side has a higher electrical resistance (resistivity) per unit length than the slot-housed portion 21 disposed on the R2 side. Specifically, comparing any two slot-housed portions 21 among the plurality of (four) slot-housed portions 21 (21a, 21b, 21c, and 21d), the cross section of the first conductor portion 31 of the slot-housed portion 21 disposed relatively on the R1 side is smaller than the cross section of the first conductor portion 31 of the slot-housed portion 21 disposed relatively on the R2 side. Comparing any two slot-housed portions 21 among the plurality of (four) slot-housed portions 21 (21a, 21b, 21c, and 21d), the cross section of the second conductor portion 32 of the slot-housed portion 21 disposed relatively on the R1 side is larger than the cross section of the second conductor portion 32 of the slot-housed portion 21 disposed relatively on the R2 side.

By adjusting the ratio (sectional area ratio) of the first conductor portion 31 (copper) and the second conductor portion 32 (aluminum) in the slot-housed portion 21, the slot-housed portion 21 disposed on the R1 side can easily have a higher resistivity than the slot-housed portion 21 disposed on the R2 side (radially outer side).

In each of the plurality of slots 13, the plurality of slot-housed portions 21 is structured such that the electrical resistance (resistivity) per unit length gradually decreases from the R1 side (radially inner side) to the R2 side (radially outer side). Specifically, in each of the plurality of (four) slots 13, the cross section of the first conductor portion 31 gradually increases in the order of the slot-housed portions 21a, 21b, 21c, and 21d from the R1 side to the R2 side. The cross section of the second conductor portion 32 gradually decreases in the order of the slot-housed portions 21a, 21b, 21c, and 21d from the R1 side to the R2 side.

Therefore, the plurality of slot-housed portions 21 can be disposed so that the resistivity gradually decreases from the R1 side (radially inner side) where the eddy current loss is likely to occur to the R2 side (radially outer side) where the eddy current loss is unlikely to occur. As a result, all the plurality of slot-housed portions 21 can easily be optimized so as to have resistivities that minimize the sum of the conductor loss and the eddy current loss.

[Second Embodiment]

The configuration of a stator 200 according to a second embodiment will be described with reference to FIG. 4. In the figure, the same parts as those in the first embodiment are denoted by the same signs.

As shown in FIG. 4, the stator 200 includes a coil portion 220. The coil portion 220 includes a plurality of (four) slot-housed portions 221 (221a, 221b, 221c, and 221d) housed in the plurality of slots 13. The plurality of (four) slot-housed portions 221a, 221b, 221c, and 221d is arranged in a row along the R direction in this order from the R1 side to the R2 side.

In each of the plurality of slots 13, first conductor portions 31 and 31a of the plurality of (four) slot-housed portions 221 (221a, 221b, 221c, and 221d) have substantially equal sectional sizes. In each of the plurality of slots 13, second conductor portions 32 and 32a of the plurality of (four) slot-housed portions 221 (221a, 221b, 221c, and 221d) have substantially equal sectional sizes.

In each of the plurality of slots 13, the slot-housed portions 221 disposed on the R1 side (radially inner side) include the first conductor portions 31 and 31a and the second conductor portions 32 and 32a having higher electrical resistances per unit length than the first conductor portions 31 and 31a. Specifically, in each of the plurality of slots 13, each of the plurality of (four) slot-housed portions 221 (221a, 221b, 221c, and 221d) includes the first conductor portion 31 or 31a and the second conductor portion 32 or 32a (having a higher resistivity than the first conductor portions 31 and 31a) that are made of materials having different resistivities. The first conductor portions 31 and 31a are made of materials having different resistivities. The second conductor portions 32 and 32a are made of materials having different resistivities.

In the stator 200, in each of the plurality of slots 13, at least one of the electrical resistance of each of the materials for the first conductor portions 31 and 31a and the electrical resistance of each of the materials for the second conductor portions 32 and 32a is higher in the slot-housed portion 221 disposed on the R1 side (radially inner side) than in the slot-housed portion 221 disposed on the R2 side (radially outer side) so that the slot-housed portion 221 disposed on the R1 side has a higher electrical resistance per unit length than the slot-housed portion 221 disposed on the R2 side.

Specifically, the slot-housed portion 221a includes the first conductor portion 31a (copper alloy) and the second conductor portion 32a (aluminum alloy). The slot-housed portion 221b includes the first conductor portion 31 (copper) and the second conductor portion 32a (aluminum alloy). The slot-housed portion 221c includes the first conductor portion 31a (copper alloy) and the second conductor portion 32 (aluminum). The slot-housed portion 221d includes the first conductor portion 31 (copper) and the second conductor portion 32 (aluminum). The copper alloy is an alloy of chromium, zirconium, and copper (CuCriZr). The resistivity of CuCriZr is approximately $2.2 \times 10^{-8}$ ($\Omega \cdot m$). The aluminum alloy is an alloy of silicon, magnesium, and aluminum ($AlSi_{10}Mg$). The resistivity of $AlSi_{10}Mg$ is approximately $4.3 \times 10^{-8}$ ($\Omega \cdot m$).

By selecting as appropriate the materials for the first conductor portions 31 and 31a and the materials for the second conductor portions 32 and 32a, the slot-housed portion 221 disposed on the R1 side (radially inner side) can easily have a higher resistivity than the slot-housed portion 221 disposed on the R2 side (radially outer side) as in the first embodiment.

The other configuration of the stator 200 in the second embodiment is the same as that of the stator 100 in the first embodiment.

[Third Embodiment]

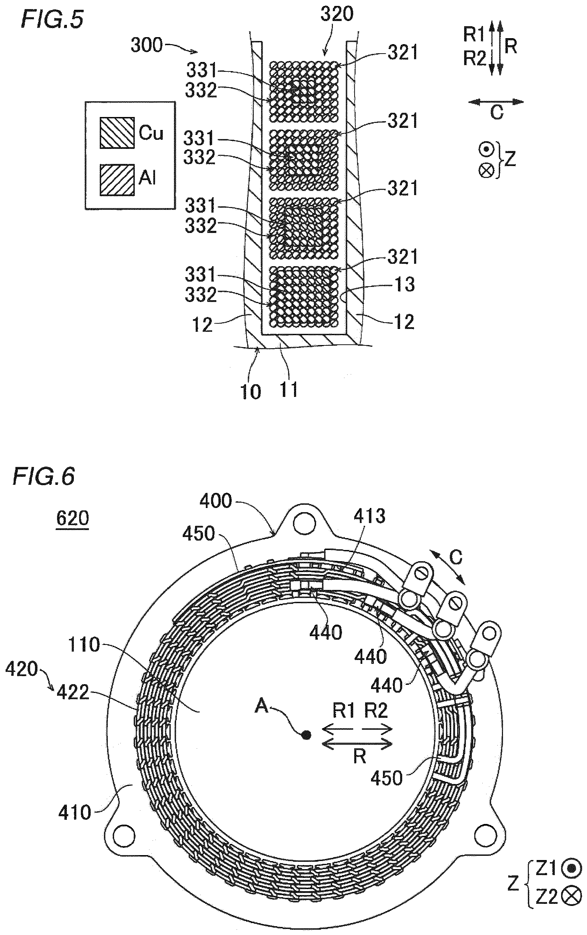

The configuration of a stator 300 according to a third embodiment will be described with reference to FIG. 5. In the figure, the same parts as those in the first embodiment are denoted by the same signs.

As shown in FIG. 5, the stator 300 includes a coil portion 320. The coil portion 320 includes a plurality of slot-housed portions 321 housed in the plurality of slots 13. In each of the plurality of slots 13, the slot-housed portion 321 disposed on the R1 side (radially inner side) includes a first conductor portion 331 and a second conductor portion 332 having a higher electrical resistance per unit length than the first conductor portion 331.

Each of the first conductor portion 331 and the second conductor portion 332 is structured by bundling a plurality of linear conductors. That is, the first conductor portion 331 and the second conductor portion 332 are so-called litz wires. Specifically, the first conductor portion 331 is structured by bundling a plurality of copper wires. The second conductor portion 332 is structured by bundling a plurality of aluminum wires.

Therefore, the cross sections of the conductors of the first conductor portion 331 and the conductors of the second conductor portion 332 are reduced. Thus, the occurrence of a skin effect in the slot-housed portion 321 can be suppressed. As a result, it is possible to suppress an increase in the conductor loss due to the skin effect. The skin effect is a phenomenon in which a current flowing through a conductor concentrates on the surface of the conductor as the frequency increases. When the current concentrates on the surface of the conductor, the conductor loss increases because the resistivity increases. The skin effect occurs more significantly as the frequency increases. Therefore, the above configuration (litz wire) is particularly effective when a high-frequency wave flows through the slot-housed portion 321 (coil portion 320).

The other configuration of the stator 300 in the third embodiment is the same as that of the stator 100 in the first embodiment.

[Fourth Embodiment]

The structure of a stator 400 according to a fourth embodiment will be described with reference to FIGS. 6 to 9.

(Configuration of Related-art Electric Motor)

An electric motor described in Japanese Unexamined Patent Application Publication No. 2020-22337 (JP 2020-22337 A) includes a rotor core including magnets. The electric motor described in JP 2020-22337 A includes a stator including an annular stator core disposed with a distance in the radial direction from the rotor core and having a plurality of slots formed in the circumferential direction, and stator coils inserted into the plurality of slots and wound around the stator core. The stator coil includes a first conductor made of an aluminum material and a second conductor made of a copper material having a higher electrical conductivity than the first conductor. The second conductor is disposed in the slot. The first conductor constitutes a coil end portion outside the slot. In the electric motor described in JP 2020-22337 A, the weight of the stator coil is reduced by using aluminum having a relatively small specific gravity.

The sectional area of the first conductor is larger than the sectional area of the second conductor so that the sectional resistances of the first conductor and the second conductor are equal to each other. Therefore, it is possible to obtain the same output performance of the electric motor as in a case where the stator coil is made only of the copper material. In this case, an increase in the size of the stator core is prevented by disposing the first conductor having a relatively large sectional area outside the stator. That is, in the electric motor described in JP 2020-22337 A, the first conductor (aluminum material) having a relatively small specific gravity is disposed outside the slot, and the second conductor (copper material) having a relatively high electrical conductivity is disposed in the slot. Thus, the weight of the stator coils can be reduced while preventing the decrease in the output performance of the electric motor and the increase in the size of the stator core (stator).

In the electric motor (stator) described in JP 2020-22337 A, the second conductor (copper material) disposed in the slot has a relatively high electrical conductivity. That is, the second conductor has a relatively low electrical resistance per unit length. The eddy current loss included in the loss occurring in the coil is proportional to the square of the density of the magnetic flux interlinking with the conductor and inversely proportional to the electrical resistance of the conductor. Since the stator core is disposed with the distance in the radial direction from the rotor core (that is, faces the rotor core in the radial direction), relatively many magnetic fluxes from the rotor core (permanent magnets) interlink with the second conductor in the slot. That is, in the electric motor described in JP 2020-22337 A, the second conductor made of the copper material having a relatively low electrical resistance is provided in the slot having a relatively high magnetic flux density. Therefore, the loss in the coil may increase due to an increase in the loss in the second conductor (eddy current loss). Therefore, there is a demand for a stator capable of preventing the increase in the loss in the coil portion.

(Structure of Stator in Fourth Embodiment)

The stator 400 together with the rotor 110 constitutes a rotary electric machine 620. For example, the rotary electric machine 620 is structured as a motor, a generator, or a motor generator. As shown in FIG. 6, the stator 400 is disposed on the radially outer side of the rotor 110 including permanent magnets (not shown). That is, in the fourth embodiment, the stator 400 constitutes the rotary electric machine 620 of an inner rotor type.

The stator 400 includes a stator core 410 and coil portions 420 disposed in the stator core 410.

(Structure of Stator Core)

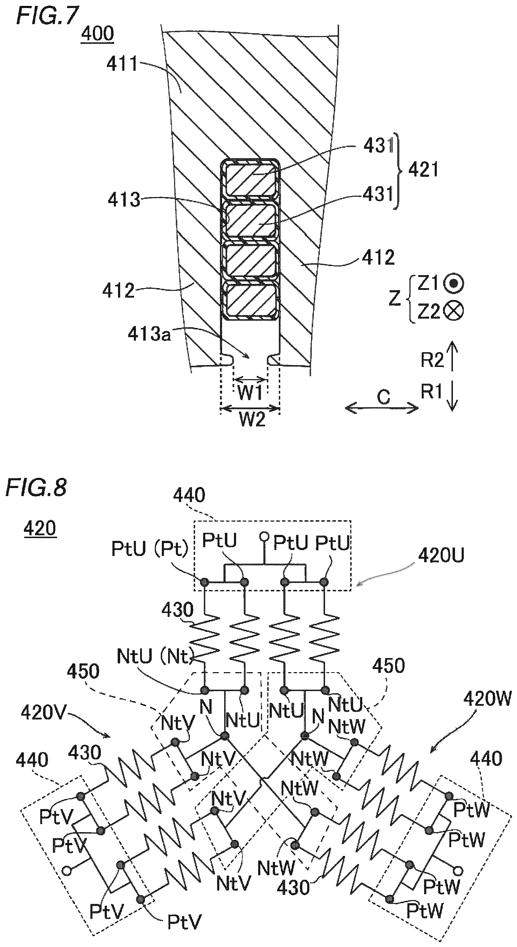

The stator core 410 has a cylindrical shape with its central axis being the central axis A (see FIG. 6). For example, the stator core 410 is formed by stacking a plurality of electromagnetic steel sheets (for example, silicon steel sheets) in the axial direction. As shown in FIG. 7, the stator core 410 includes a back yoke 411 having an annular shape when viewed in the axial direction, and a plurality of slots 413 provided on the radially inner side of the back yoke 411 and extending in the axial direction.

The stator core 410 includes a plurality of teeth 412 on both sides of each slot 413 in the circumferential direction. The teeth 412 are formed so as to protrude radially inward from the back yoke 411.

The slot 413 has an opening 413a that is open to the radially inner side. The slot 413 is also open to both sides in the axial direction. The slot 413 is structured as a semi-open slot in which a circumferential width W1 of the opening 413a is smaller than a width W2 of a part where the coil portion 420 is disposed.

(Structure of Coil Portion)

As shown in FIG. 7, the coil portion 420 includes slot-housed portions 421 housed (disposed) in the slots 413, and coil end portions 422 (see FIG. 6) disposed outside the stator core 410 (slots 413) in the axial direction.

The coil portion 420 is structured, for example, as a wave winding coil. The coil portion 420 is structured as a coil of four turns. That is, in each of the plurality of slots 413, four first conductor portions 431 described later are arranged in the radial direction. The number of turns of the coil portion 420 described above is merely an example, and is not limited to the above number of turns. The sectional shapes and sizes (areas) of the four first conductor portions 431 in the slot 413 are substantially the same.

As shown in FIG. 8, the coil portion 420 generates a magnetic flux by being supplied with three-phase alternating current power from a power supply unit (not shown). Specifically, the coil portions 420 are connected (wired) by three-phase Y-connection. That is, the coil portions 420 include a U-phase coil portion 420U, a V-phase coil portion 420V, and a W-phase coil portion 420W. The coil portions 420 have a plurality of (for example, two) neutral points N. Specifically, the coil portions 420 are connected in four parallel lines (star connection). That is, the U-phase coil portion 420U has four neutral point connection ends NtU and four power line connection ends PtU. The V-phase coil portion 420V has four neutral point connection ends NtV and four power line connection ends PtV The W-phase coil portion 420W has four neutral point connection ends NtW and four power line connection ends PtW.

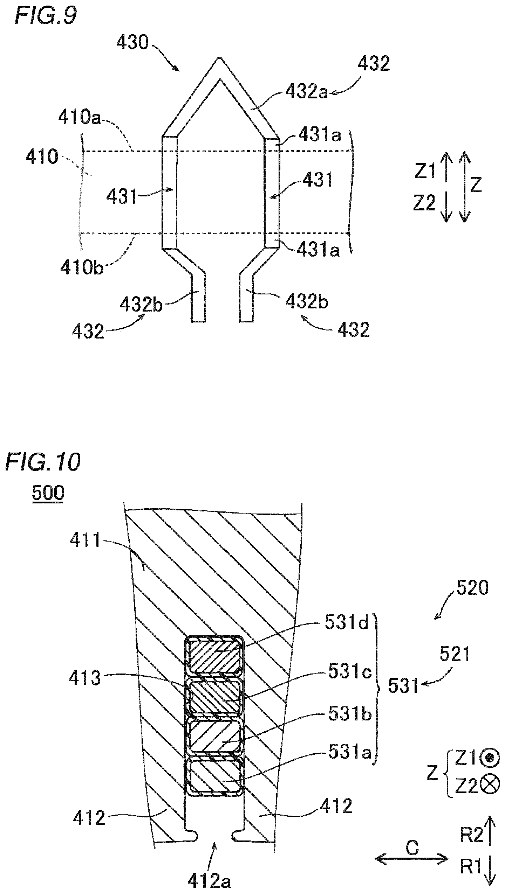

As shown in FIG. 9, the coil portion 420 includes the plurality of first conductor portions 431 arranged in the radial direction of the stator core 410 in each of the plurality of slots 413 and constituting the slot-housed portions 421. The coil portion 420 includes a plurality of second conductor portions 432 constituting the coil end portions 422 and connecting the first conductor portions 431 disposed in different slots 413 on at least one side of the stator core 410 in the axial direction. Specifically, the coil portion 420 includes a plurality of segment conductors 430 each including the first conductor portions 431 and the second conductor portions 432. Each of the plurality of segment conductors 430 includes a pair of first conductor portions 431. Each of the pair of first conductor portions 431 extends linearly in the axial direction along the slot 413.

The coil portion 420 includes a plurality of (for example, three) power segment conductors 440 (see FIG. 6) as the segment conductors 430 and a plurality of (for example, two) neutral point segment conductors 450 (see FIG. 6) as the segment conductors 430.

The electrical resistance per unit length for at least a part of the plurality of first conductor portions 431 disposed in the plurality of slots 413 is higher than the electrical resistance per unit length for the second conductor portion 432.

Therefore, the electrical resistance per unit length for at least a part of the plurality of first conductor portions 431 disposed in the slots 413 having a relatively high magnetic flux density is higher than the electrical resistance per unit length for the second conductor portion 432 constituting the coil end portion 422. Thus, it is possible to prevent the increase in the eddy current loss in the first conductor portion 431 (slot-housed portion 421). As a result, it is possible to prevent the increase in the loss in the coil portion 420. In particular, this configuration is effective in the improvement against the loss (eddy current loss) in the coil portion 420 during high-speed operation of the rotary electric machine 620 in which the eddy current loss increases due to an increase in the frequency.

Since the conductor loss included in the loss occurring in the coil portion 420 is proportional to the electrical resistance of the conductor, the conductor loss in the second conductor portion 432 (coil end portion 422) can relatively be reduced with the configuration in which the electrical resistance per unit length for the second conductor portion 432 is lower than the electrical resistance per unit length for the first conductor portion 431. Since the conductor loss does not depend on the frequency, the conductor loss can relatively be reduced during both the high-speed operation and the low-speed operation of the rotary electric machine 620.

The electrical resistance per unit length for all the plurality of first conductor portions 431 disposed in the plurality of slots 413 is higher than the electrical resistance per unit length for the second conductor portion 432.

Specifically, all the plurality of first conductor portions 431 disposed in the plurality of slots 413 are made of aluminum. The second conductor portion 432 is made of copper. The electrical resistance per unit length for aluminum is approximately $2.8 \times 10^{-8}$ ($\Omega \cdot$m). The electrical resistance per unit length for copper is approximately $1.7 \times 10^{-8}$ ($\Omega$m).

Since all the plurality of first conductor portions 431 in the slots 413 are made of aluminum having a higher electrical resistance than copper, the eddy current loss in the coil portion 420 (slot-housed portion 421) can be reduced compared to a case where at least a part of the plurality of first conductor portions 431 in the slots 413 is made of copper. Since aluminum has a smaller specific gravity than copper, the weight of the coil portion 420 can be reduced compared to the case where at least a part of the plurality of first conductor portions 431 in the slots 413 is made of copper. That is, it is possible to prevent the increase in the loss in the coil portion 420 while reducing the weight of the coil portion 420.

The second conductor portions 432 are provided on both sides of the stator core 410 in the axial direction.

Therefore, the conductor loss in the coil portion 420 (coil end portions 422) on both sides of the stator core 410 in the axial direction can relatively be reduced. Thus, it is possible to prevent the increase in the loss in the coil portion 420 more reliably.

Specifically, the second conductor portions 432 include a conductor portion 432a disposed on a Z1 side. The conductor portion 432a connects the pair of first conductor portions 431 of the segment conductor 430, and is bent into a V-shape when viewed in the radial direction. The second conductor portions 432 include conductor portions 432b disposed on a Z2 side. The conductor portions 432b are provided so as to extend from the pair of first conductor portions 431 to the Z2 side, and are connected to conductor portions 432b of another segment conductor 430 on the Z2 side outside the slots 413. FIG. 9 shows the state of the segment conductor 430 before the conductor portions 432b on the Z2 side are connected. When only the term "second conductor portion 432" is given hereinafter, the content applies to both the conductor portion 432a and the conductor portion 432b.

The first conductor portion 431 is provided so as to extend at least from an end face 410a of the stator core 410 on one side (Z1 side) in the axial direction to an end face 410b on the other side (Z2 side) in the axial direction. Specifically, both axial ends 431a of the first conductor portion 431 protrude from the stator core 410 (slots 413) to the outside of the stator core 410. That is, the connecting portions between the first conductor portion 431 and the second conductor portions 432 are provided outside the stator core 410.

Each of the first conductor portion 431 and the second conductor portion 432 is structured by a rectangular conductor. Specifically, the first conductor portion 431 is structured such that the cross section (cross section orthogonal to the direction in which the first conductor portion 431 extends) has a rectangular shape (see FIG. 7). Although illustration is omitted for the sake of simplification, the second conductor portion 432 is structured such that the cross section (cross section orthogonal to the direction in which the second conductor portion 432 extends) has a rectangular shape.

Since the first conductor portion 431 has the rectangular cross section, the space factor of the first conductor portion 431 in the slot 413 can be increased compared to a case where the first conductor portion 431 has a circular cross section. Since the second conductor portion 432 has the rectangular cross section, the plurality of second conductor portions 432 can be disposed more densely in the coil end portion 422 compared to a case where the second conductor portion 432 has a circular cross section.

In recent years, there is a tendency to use large currents (high voltages) in rotary electric machines. Therefore, there is a demand to increase the area (S) of the cross section of the conductor to reduce the conductor loss. Since the first conductor portion 431 and the second conductor portion 432 are structured by the rectangular conductors as described above, the areas of the cross sections of the first conductor portion 431 and the second conductor portion 432 can easily be increased compared to the case where the first conductor portion 431 and the second conductor portion 432 have circular cross sections. As a result, the conductor loss in each of the first conductor portion 431 and the second conductor portion 432 can be reduced easily.

The eddy current loss increases when the areas of the cross sections of the first conductor portion 431 and the second conductor portion 432 are increased to reduce the conductor loss. To reduce the eddy current loss, as described above, the first conductor portion 431 having a higher electrical resistance per unit length than the electrical resistance per unit length for the second conductor portion 432 constituting the coil end portion 422 is disposed in the slot 413.

The first conductor portions 431 and the second conductor portions 432 are formed integrally. In other words, in each of the plurality of segment conductors 430, the first conductor portions 431 and the second conductor portions 432 are provided inseparably. The plurality of segment conductors 430 is formed by 3D printing (forming a three-dimensional object by using a 3D printer).

The other configuration of the stator 400 in the fourth embodiment is the same as that of the stator 100 in the first embodiment.

[Fifth Embodiment]

Next, a stator 500 according to a fifth embodiment will be described with reference to FIG. 5. In the stator 500 of the fifth embodiment, a part of a plurality of first conductor portions 531 in the slot 413 is made of a material other than aluminum unlike the fourth embodiment in which all the plurality of first conductor portions 431 in the slot 413 are made of aluminum. Configurations similar to those of the fourth embodiment are denoted by the same signs as those of the fourth embodiment in the drawings, and description thereof will be omitted.

[Structure of Stator]

As shown in FIG. 10, the stator 500 includes a coil portion 520.

The coil portion 520 includes slot-housed portions 521 housed (disposed) in the slot 413. The configuration of the coil end portion 422 of the coil portion 520 is the same as that of the coil end portion 422 (second conductor portion 432) of the fourth embodiment. Therefore, detailed description and illustration thereof will be omitted.

The coil portion 520 includes a plurality of first conductor portions 531 arranged in the radial direction in each of the plurality of slots 413 and constituting the slot-housed portions 521.

Among the plurality of first conductor portions 531 in each of the plurality of slots 413, the electrical resistance per unit length for the first conductor portion 531 disposed on the radially inner side is higher than the electrical resistance per unit length for the first conductor portion 531 disposed on the radially outer side.

In the slot 413, the amount of interlinking magnetic flux is larger on the radially inner side than on the radially outer side. By disposing the first conductor portion 531 having a relatively high electrical resistance per unit length on the radially inner side, it is possible to prevent an increase in the eddy current loss in the first conductor portion 531 disposed on the radially inner side. By disposing the first conductor portion 531 having a relatively low electrical resistance per unit length on the radially outer side where the amount of interlinking magnetic flux is relatively small, it is possible to prevent an increase in the conductor loss while preventing the increase in the eddy current loss in the first conductor portion 531 disposed on the radially outer side. As a result of these features, it is possible to effectively prevent the increase in the loss in the coil portion 520.

Specifically, the plurality of first conductor portions 531 in each of the plurality of slots 413 is arranged in the radial direction so that the electrical resistance per unit length for the first conductor portion 531 gradually decreases from the radially inner side to the radially outer side.

Specifically, the first conductor portions 531 include a conductor portion 531a made of an aluminum alloy, a conductor portion 531b made of aluminum, a conductor portion 531c made of a copper alloy, and a conductor portion 531d made of copper. The stator 500 is structured such that the conductor portions 531a, 531b, 531c, and 531d are arranged in this order from the radially inner side in each of the plurality of slots 413. The aluminum alloy is an alloy of silicon, magnesium, and aluminum ($AlSi_{10}Mg$). The copper alloy is an alloy of chromium, zirconium, and copper (CuCriZr). The electrical resistance per unit length for the aluminum alloy is approximately $4.3 \times 10^{-8}$ ($\Omega \cdot m$). The electrical resistance per unit length for the copper alloy is approximately $2.2 \times 10^{-8}$ ($\Omega \cdot m$).

The other configuration of the fifth embodiment is the same as that of the fourth embodiment.

[Modifications]

The embodiments disclosed herein should be construed as illustrative in all respects and not restrictive. The scope of the present invention is defined by the claims rather than by the above description of the embodiments, and includes all changes (modifications) that fall within the meaning and scope equivalent to the claims.

For example, in the first to fifth embodiments, description has been given of the example in which the coil portion 20 (220, 320, 420, 520) is structured such that the plurality of slot-housed portions 21 (221, 321, 421, 521) housed in each of the plurality of slots 13 (413) is arranged in a row along the R direction (radial direction). However, the present invention is not limited to this. In the present invention, the coil portion may be structured such that the plurality of slot-housed portions housed in each of the plurality of slots is arranged in a plurality of rows along the radial direction.

In the first and third embodiments, description has been given of the example in which the first conductor portion 31 (331) and the second conductor portion 32 (332) are made of copper (Cu) and aluminum (Al), respectively. However, the present invention is not limited to this. In the present invention, the first conductor portion and the second conductor portion may be made of a copper alloy (for example, CuCriZr) and an aluminum alloy (for example, $AlSi_{10}Mg$), respectively. The first conductor portion and the second conductor portion may be made of copper and an aluminum alloy, respectively, or may be made of a copper alloy and aluminum, respectively. The first conductor portion and the second conductor portion may be made of copper and a copper alloy, respectively, or may be made of aluminum and an aluminum alloy, respectively. The first conductor portion and the second conductor portion may be made of two types of copper alloy having different resistivities, or may be made of aluminum alloys having different resistivities. The first conductor portion and the second conductor portion may be made of metals other than copper and aluminum, or may be made of copper or aluminum and a metal other than copper and aluminum.

In the second embodiment, description has been given of the example in which, among the plurality of (four) slot-housed portions 221 (221a, 221b, 221c, and 221d) in each of the plurality of slots 13, the slot-housed portion 221a includes the first conductor portion 31a (copper alloy) and the second conductor portion 32a (aluminum alloy), the slot-housed portion 221b includes the first conductor portion 31 (copper) and the second conductor portion 32a (aluminum alloy), the slot-housed portion 221c includes the first conductor portion 31a (copper alloy) and the second conductor portion 32 (aluminum), and the slot-housed portion 221d includes the first conductor portion 31 (copper) and the second conductor portion 32 (aluminum). However, the present invention is not limited to this. In the present invention, the materials for the plurality of slot-housed portions may be used in combinations other than the above combinations as long as the slot-housed portion disposed on the radially inner side has a higher electrical resistance per unit length than the slot-housed portion disposed on the radially outer side.

In the third embodiment, description has been given of the example in which each of the first conductor portion 331 and the second conductor portion 332 is structured by bundling a plurality of linear conductors. However, the present invention is not limited to this. In the present invention, only one of the first conductor portion and the second conductor portion may be structured by bundling a plurality of linear conductors.

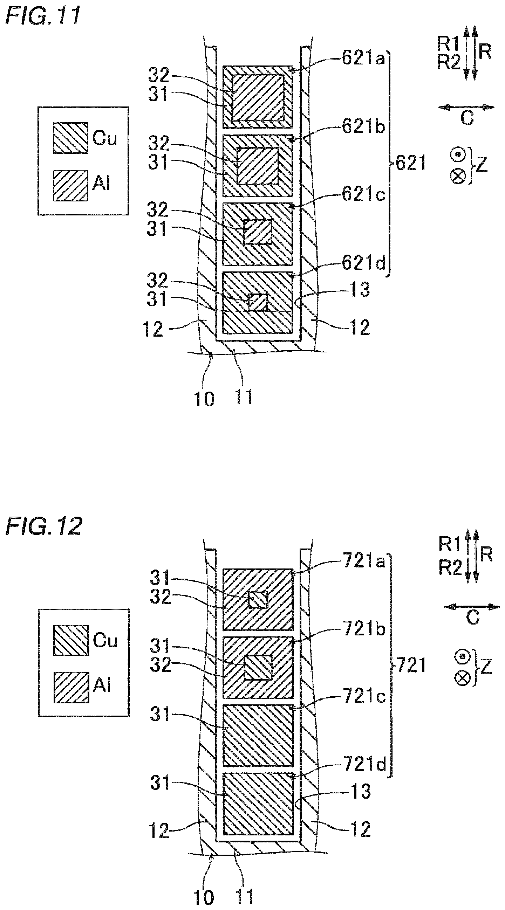

In the first to third embodiments, description has been given of the example in which, in each of the plurality of slots 13, the slot-housed portion 21 (221, 321) including the first conductor portion 31 (231, 331) and the second conductor portion 32 (232, 332) is structured such that the second conductor portion 32 surrounds the first conductor portion 31. However, the present invention is not limited to this. In the present invention, as in a first modification shown in FIG. 11, in each of the plurality of slots 13, slot-housed portions 621 (621a, 621b, 621c, and 621d) each including the first conductor portion 31 and the second conductor portion 32 may be structured such that the first conductor portion 31 surrounds the second conductor portion 32. In each of the plurality of slots, a part of the slot-housed portions each including the first conductor portion and the second conductor portion may be structured such that the second conductor portion surrounds the first conductor portion, and the other of the slot-housed portions each including the first conductor portion and the second conductor portion may be structured such that the first conductor portion surrounds the second conductor portion. In each of the plurality of slots, one of the first conductor portion and the second conductor portion may not surround the other (for example, the first conductor portion and the second conductor portion may be arranged).

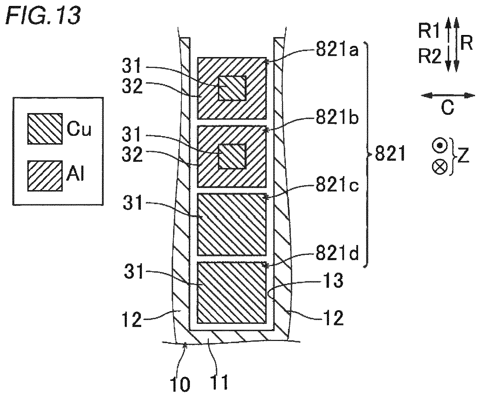

In the first to third embodiments, description has been given of the example in which, in each of the plurality of slots 13, the plurality of slot-housed portions 21 (221, 321) is structured such that the electrical resistance per unit length gradually decreases from the R1 side (radially inner side) to the R2 side (radially outer side). However, the present invention is not limited to this. In the present invention, as in a second modification shown in FIG. 12, in each of the plurality of slots 13, slot-housed portions 721c and 721d disposed on the R2 side among a plurality of (four) slot-housed portions 721 (721a, 721b, 721c, and 721d) may have equal electrical resistances per unit length. As in a third modification shown in FIG. 13, in each of the plurality of slots 13, slot-housed portions 821c and 821d disposed on the R2 side among a plurality of (four) slot-housed portions 821 (821a, 821b, 821c, and 821d) may have equal electrical resistances per unit length, and slot-housed portions 821a and 821b disposed on the R1 side may have equal electrical resistances per unit length.

In the second modification shown in FIG. 12, in each of the plurality of slots 13, the slot-housed portions 721a and 721b disposed on the R1 side among the plurality of (four) slot-housed portions 721 (721a, 721b, 721c, and 721d) are structured such that the second conductor portion 32 surrounds the first conductor portion 31. In each of the plurality of slots 13, each of the slot-housed portions 721c and 721d disposed on the R2 side among the plurality of (four) slot-housed portions 721 includes (only) the first conductor portion 31. Similarly, in the third modification shown in FIG. 13, in each of the plurality of slots 13, the slot-housed portions 821a and 821b disposed on the R1 side among the plurality of (four) slot-housed portions 821 (821a, 821b, 821c, and 821d) are structured such that the second conductor portion 32 surrounds the first conductor portion 31. In each of the plurality of slots 13, each of the slot-housed portions 821c and 821d disposed on the R2 side among the plurality of (four) slot-housed portions 821 includes (only) the first conductor portion 31. That is, in the second modification shown in FIG. 12 and the third modification shown in FIG. 13, in each of the plurality of slots 13, at least the slot-housed portion 721d (821d) disposed on the outermost side in the R direction (radial direction) includes the first conductor portion 31, and at least the slot-housed portion 721a (821a) disposed on the innermost side in the R direction (radial direction) includes the first conductor portion 31 and the second conductor portion 32. Therefore, in each of the plurality of slots 13, at least the slot-housed portion 721a (821a) disposed on the innermost side in the R direction (radial direction) need not include the first conductor portion 31 and the second conductor portion 32. As a result, the overall loss occurring in the slot-housed portions 21 can be reduced more easily compared to a case where all the slot-housed portions 721d (821d) in the plurality of slots 13 include the first conductor portion 31 and the second conductor portion 32.

In the first to fifth embodiments, description has been given of the example in which the coil portion 20 (220, 320, 420, 520) is structured such that the number of the plurality of slot-housed portions 21 (221, 321, 421, 521) housed in each of the plurality of slots 13 (413) is four. However, the present invention is not limited to this. In the present invention, the coil portion may be structured such that the number of the plurality of slot-housed portions housed in each of the plurality of slots is other than four (two, three, five, or more).

In the first to third embodiments, description has been given of the example in which, in each of the plurality of slots 13, each of the plurality of slot-housed portions 21 (221, 321) has the rectangular cross section. However, the present invention is not limited to this. In the present invention, in each of the plurality of slots, the cross section of each of the plurality of slot-housed portions may have a shape other than the rectangular shape (for example, a circular shape). When each of the plurality of slot-housed portions has the circular cross section, the cross section of the first conductor portion has a circular shape, and the cross section of the second conductor portion has an annular shape surrounding the first conductor portion.

In the first to fifth embodiments, description has been given of the example in which, in each of the plurality of slots 13 (413), the plurality of slot-housed portions 21 (221, 321, 421, 521) has substantially equal cross sections. However, the present invention is not limited to this. In the present invention, in each of the plurality of slots, the plurality of slot-housed portions may include those having different cross sections. For example, the cross sections of the plurality of slot-housed portions 21 (221, 321, 421, 521) in the slot 13 (413) may have the same size (area) but different shapes. For example, the radial width of the cross section may be smaller in the slot-housed portion 21 (221, 321, 421, 521) on the radially inner side. In this case, t (thickness of the conductor in the direction of magnetic flux flow) in Expression (1) above is smaller on the radially inner side where the magnetic flux density is relatively high. Therefore, it is possible to prevent the increase in the eddy current loss in the slot-housed portion 21 (221, 321, 421, 521) disposed on the radially inner side.

In the first and third embodiments and in the second embodiment, description has been given of the example in which, in each of the plurality of slots 13, the slot-housed portion 21 (221, 321) disposed on the R1 side (radially inner side) has a higher electrical resistance per unit length than the slot-housed portion 21 (221, 321) disposed on the R2 side (radially outer side) by different methods. However, the present invention is not limited to this. In the present invention, the method in the first and third embodiments and the method in the second embodiment may be used together.

In the fourth embodiment, description has been given of the example in which all the plurality of first conductor portions 431 in the slot 413 are made of aluminum. However, the present invention is not limited to this. For example, all the plurality of first conductor portions 431 in the slot 413 may be made of an aluminum alloy.

In the fourth and fifth embodiments, description has been given of the example in which the second conductor portions 432 are provided on both sides of the stator core 410 in the axial direction. However, the present invention is not limited to this. The second conductor portion 432 may be provided only on one side of the stator core 410 in the axial direction.

In the fourth and fifth embodiments, description has been given of the example in which each of the first conductor portion (431, 531) and the second conductor portion 432 is structured by the rectangular conductor. However, the present invention is not limited to this. Each of the first conductor portion (431, 531) and the second conductor portion 432 may be structured by a round wire.

In the fifth embodiment, description has been given of the example in which the plurality of first conductor portions 531 in each of the plurality of slots 413 is disposed so that the electrical resistance per unit length for the first conductor portion 531 gradually decreases from the radially inner side to the radially outer side. However, the present invention is not limited to this. For example, the first conductor portions 531 up to the Nth (for example, second) first conductor portion 531 from the radially inner side may be made of a predetermined material (for example, an aluminum alloy), and the (N+1)th (that is, third) and subsequent first conductor portions 531 from the radially inner side may be made of a conductor (for example, a copper alloy) having a lower electrical resistance per unit length than the predetermined material.

In the fourth and fifth embodiments, description has been given of the example in which the second conductor portion 432 is made of copper. However, the present invention is not limited to this. For example, the second conductor portion 432 may be made of a copper alloy.

In the fourth embodiment, description has been given of the example in which the first conductor portions 431 and the second conductor portions 432 are formed integrally by 3D printing. However, the present invention is not limited to this. For example, the first conductor portions 431 and the second conductor portions 432 may be provided separately from each other and the first conductor portions 431 and the second conductor portions 432 may joined by welding, silver nanopaste, or the like. Only the second conductor portions 432 may be formed by 3D printing (to be added to the first conductor portions 431) while the first conductor portions 431 are set in a 3D printing apparatus in advance. The same configuration may be applied to the fifth embodiment.

In the fourth embodiment, description has been given of the example in which different segment conductors 430 (second conductor portions 432) are connected to each other outside the slots 413. However, the present invention is not limited to this. The ends of U-shaped segment conductors provided on one side and the other side in the axial direction may be connected to each other in the slots 413.

In the fourth embodiment, description has been given of the example in which the first conductor portion 431 is made of aluminum and the second conductor portion 432 is made of copper. However, the present invention is not limited to this. For example, the first conductor portion 431 may be made of a copper alloy and the second conductor portion 432 may be made of copper.

Description of the Reference Numerals

10 ... stator core, 13 ... slot, 20, 220, 320 ... coil portion, 21 (21a, 21b, 21c, 21d), 221 (221a, 221b, 221c, 221d), 321 (321a, 321b, 321c, 321d), 621 (621a, 621b, 621c, 621d), 721 (721a, 721b, 721c, 721d), 821 (821a, 821b, 821c, 821d) ... slot-housed portion, 31, 31a, 331 ... first conductor portion, 32, 32a, 332 ... second conductor portion, 100, 200, 300 ... stator

**Claims**

1. A stator comprising:

   a stator core having a plurality of slots; and
   a coil portion disposed in the stator core and including a plurality of slot-housed portions arranged in the plurality of slots in a radial direction of the stator core, wherein
   in each of the plurality of slots, the slot-housed portion disposed on an inner side in the radial direction includes a first conductor portion and a second conductor portion having a higher electrical resistance per unit length than the first conductor portion, and is structured to have a higher electrical resistance per unit length than the slot-housed portion disposed on an outer side in the radial direction.

2. The stator according to claim 1, wherein in each of the plurality of slots, the slot-housed portion including the first conductor portion and the second conductor portion is structured such that one of the first conductor portion and the second conductor portion surrounds the other.

3. The stator according to claim 1 or 2, wherein in each of the plurality of slots, a ratio of the second conductor portion to the first conductor portion in the slot-housed portion is higher in the slot-housed portion disposed on the inner side in the radial direction than in the slot-housed portion disposed on the outer side in the radial direction so that the slot-housed portion disposed on the inner side in the radial direction has a higher electrical resistance per unit length than the slot-housed portion disposed on the outer side in the radial direction.

4. The stator according to any one of claims 1 to 3, wherein in each of the plurality of slots, at least the slot-housed portion disposed on an outermost side in the radial direction includes the first conductor portion, and at least the slot-housed portion disposed on an innermost side in the radial direction includes the first conductor portion and the second conductor portion.

5. The stator according to any one of claims 1 to 4, wherein

   the first conductor portion is made of copper or a copper alloy, and
   the second conductor portion is made of aluminum or an aluminum alloy.

*FIG.1*

*FIG.2*

FIG.3

FIG.4

FIG.5

FIG.6

## FIG.7
400

411
431
431 } 421
413
412
412
413a

W1
W2

Z { Z1 ⊙
Z2 ⊗

R2 ↑
C ↔ R1 ↓

## FIG.8
420

440

PtU (Pt) PtU PtU PtU
430
420U

NtU (Nt)
450 450

420V N 420W

440 430 NtV NtU NtU NtW 440
NtV NtW
PtV NtV NtW PtW
PtV PtW
NtV NtW
PtV NtV NtW PtW
PtW 430
PtV PtW

*FIG.9*

*FIG.10*

500

FIG.11

FIG.12

FIG.13

## INTERNATIONAL SEARCH REPORT

| International application No. |
| --- |
| **PCT/JP2021/041345** |

| A. | CLASSIFICATION OF SUBJECT MATTER |
| --- | --- |

*H02K 3/02*(2006.01)i; *H02K 3/04*(2006.01)i; *H02K 3/28*(2006.01)i
FI:   H02K3/02; H02K3/04 E; H02K3/28 M; H02K3/28 N

According to International Patent Classification (IPC) or to both national classification and IPC

| B. | FIELDS SEARCHED |
| --- | --- |

Minimum documentation searched (classification system followed by classification symbols)

H02K3/02; H02K3/04; H02K3/28

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | US 2020/0235621 A1 (BORGWARNER, INC.) 23 July 2020 (2020-07-23) paragraphs [0002]-[0049], fig. 1-8 | 1, 3, 5 |
| A | JP 2010-183741 A (AISIN AW CO., LTD.) 19 August 2010 (2010-08-19) paragraphs [0008]-[0082], fig. 1-13 | 1-5 |

☐ Further documents are listed in the continuation of Box C.   ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **21 December 2021** | **11 January 2022** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT
### Information on patent family members

International application No.

**PCT/JP2021/041345**

| Patent document cited in search report | | Publication date (day/month/year) | Patent family member(s) | | Publication date (day/month/year) |
|---|---|---|---|---|---|
| US | 2020/0235621 A1 | 23 July 2020 | DE | 102020100796 A1 | |
| JP | 2010-183741 A | 19 August 2010 | (Family: none) | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010183741 A
- JP 2020022337 A